# EUROPÄISCHE PATENTSCHRIFT

(11) **EP 1 194 257 B1**
(45) Veröffentlichungstag und Bekanntmachung des Hinweises auf die Patenterteilung: **02.05.2003**
(21) Anmeldenummer: 00945727.6
(22) Anmeldetag: 08.06.2000
(51) Int. Cl.: B23B 31/10

(54) **EINSTELLGERÄT ZUR BESTIMMUNG DER PASSENDEN SPANNBACKEN UND DEREN POSITION**
ADJUSTING DEVICE FOR DETERMINING WHICH CLAMPING JAWS ARE SUITABLE AND FOR DETERMINING THEIR POSITION
DISPOSITIF D'AJUSTAGE SERVANT A DETERMINER QUELLES MACHOIRES DE SERRAGE CONVIENNENT AINSI QUE LEUR POSITION

(30) Priorität: 18.06.1999 DE 19927854
(43) Veröffentlichungstag der Anmeldung: 10.04.2002
(73) Patentinhaber: Schunger, Josef, 88499 Altheim (DE)
(72) Erfinder: Schunger, Josef, 88499 Altheim (DE)
(74) Vertreter: Möbus, Daniela, Dr.-Ing.
(86) Internationale Anmeldenummer: EP0005285
(87) Internationale Veröffentlichungsnummer: WO00078488

(56) Entgegenhaltungen:
- CH-A- 679 652
- DE-A- 1 816 656
- FR-A- 1 236 584
- US-A- 4 746 131

## Beschreibung

Bei Bearbeitungsmaschinen mit Spannfuttern für die verschiedensten Werkstücke müssen die Spannbacken (weiche oder harte Backen für Innen- oder Außenspannung) je nach Durchmesser des zu bearbeitenden Werkstücks ausgewählt und ins Spannfutter eingeschoben oder aufgeschraubt werden. Handelt es sich hierbei um Spannfutter, an denen Werkstücke unterschiedlicher Durchmesser bearbeitet werden, ist ein entsprechend häufiger Wechsel und ein Nachbearbeiten der Spannbacken durch Ausdrehen oder Ausfräsen erforderlich. In der Praxis stellt schon die Auswahl der für den Spanndurchmesser geeigneten Spannbacken eine Schwierigkeit dar. Diese Schwierigkeiten verschärfen sich durch die Einstellarbeiten, d. h. dem Einsetzen oder Aufschrauben der Spannbacken auf das Futter zum Spannen des Werkstücks. Bisher ist dies nur durch Versuche möglich, bei denen alle Spannbacken, d. h. in der Regel drei Spannbacken montiert und anschließend in ihrer Lage korrigiert oder sogar ausgetauscht werden müssen. Dieser Vorgang des Ausprobierens der richtigen Spannbackengröße und -position erweist sich als sehr zeitraubend.

Der vorliegenden Erfindung liegt die Aufgabe zugrunde, eine einfache und rasche Möglichkeit zur Bestimmung der passenden Spannbackengröße sowie der Position der Backe für einen bestimmten Werkstückdurchmesser außerhalb der Bearbeitungsmaschine zu schaffen.

Die Aufgabe wird gelöst mit einem Einstellgerät zur Bestimmung der passenden Spannbackengröße und -position für ein in einem gegebenen Spannfutter zu spannenden Werkstück mit einer Grundplatte und einem darauf angeordneten Sockel für eine Spannbacke sowie einem auf der Grundplatte angeordneten Ständer, an dem ein Messarm horizontal verstellbar gelagert ist, der an seinem Ende einen vertikal verstellbaren Taster aufweist, wobei mit dem Messarm die für einen bestimmten Werkstückdurchmesser erforderliche Position der Spannfläche der Spannbacke einstellbar ist und anschließend die Spannfläche einer auszutestenden Spannbacke durch Verschieben der Spannbacke auf dem Sockel in Anschlag gegen den vertikal verstellbaren Taster am Ende des Messarms bringbar ist.

Der Durchmesser des zu bearbeitenden Werkstücks ist im Voraus bekannt. Entsprechend diesem Durchmesser wird der Messarm, der vorzugsweise mit einer Skala und/oder einem Zählwerk oder einer anderen Messeinrichtung versehen sein kann, im Ständer mehr oder weniger weit ausgefahren. Die Außen- oder Innenseite des vertikal verstellbaren Tasters am Ende des Messarms entspricht dann der erforderlichen Position der Spannfläche einer Spannbacke, je nachdem, ob es sich um eine Außen- oder Innenspannung des Werkstücks handelt. Es können dann verschiedene Spannbacken auf den Sockel, der einem Ausschnitt des Spannfutters entspricht, aufgelegt und so weit in Richtung auf den Taster zubewegt werden, bis die Spannfläche der Spannbacke in Berührung mit dem Taster kommt. Da der Sockel die Spannbackenaufnahme im Futter repräsentiert, ist sofort ersichtlich, ob die Spannbacke möglicherweise zu klein ist, d. h. so weit radial nach innen verfahren werden muss, dass sie nicht mehr sicher im Futter gehalten werden könnte. Auch eine zu große Spannbacke ist sofort zu ermitteln, da diese dann gegebenenfalls radial zu weit über das Futter nach außen ragen würde.

In diesem Fall müsste ein anderer Backensatz verwendet oder die Backen nachbearbeitet werden.

Weitere Vorteile ergeben sich, wenn an der im Verhältnis zur Position des Sockels der Futterachse entsprechenden Stelle auf der Grundplatte Körper mit einem dreieckförmigen Querschnitt einsetzbar sind, wobei die Seitenlängen des dreieckförmigen Querschnitts der Breite der jeweiligen auszutestenden Spannbacke entsprechen. Mit Hilfe des dreieckförmigen Prüfkörpers kann daher sofort kontrolliert werden, ob bei Verwendung des gerade ausgetesteten Spannbackentyps, die Kanten der drei Spannbacken beim Einsetzen in den Futterkörper oder sogar erst beim Spannvorgang des Werkstücks miteinander kollidieren würden.

Die erfindungsgemäße Vorrichtung eignet sich auch dafür, einen neu einzuarbeitenden Durchmesser in neuen oder gebrauchten Spannbacken mit Hilfe des Tasters zu kennzeichnen oder anzureißen. Dabei ist vorzugsweise der Sockel um die der Futterachse entsprechende Stelle auf der Grundplatte begrenzt verschwenkt angeordnet. Außerdem lässt sich mit dem Einstellgerät feststellen, ob die Krümmung der Spannfläche der Krümmung des zu spannenden Werkstücks entspricht oder ob gegebenenfalls eine Nachbearbeitung der Spannfläche notwendig ist. Ist eine Nachbearbeitung notwendig, so kann mit dem Taster angezeichnet werden, wie die Spannfläche nachgearbeitet werden muss, um das Werkstück spannen zu können.

Auch die Bestimmung eines passenden Spannrings oder einer Scheibe zum Ausdrehen der Spannbacken kann mit der erfindungsgemäßen Vorrichtung vorgenommen werden. Man bestimmt hierzu, wo der Ausdrehring eingelegt werden soll und fährt anschließend mit dem Taster an diese Stelle und liest mit Hilfe der Messeinrichtung am horizontalen Messarm den notwendigen Durchmesser des Ausdrehrings ab. Dieser Ausdrehring ist erforderlich, damit die Backen während des Ausdrehens unter einer radialen Vorspannung stehen. Nur dadurch ist ein exakt rundes Ausdrehen der drei Spannbacken im Futter möglich.

Nachfolgend wird ein bevorzugtes Ausführungsbeispiel einer erfindungsgemäßen Messvorrichtung anhand der Zeichnung näher erläutert.

Es zeigen:
- Fig. 1: eine Seitenansicht einer erfindungsgemäßen Vorrichtung mit Spannbacke;
- Fig. 2: eine Vorderansicht auf die Vorrichtung aus Fig. 1;
- Fig. 3: eine Ansicht von oben auf die Vorrichtung aus Fig. 1;
- Fig. 4: eine vergrößerte Detailansicht eines in die Vorrichtung aus Fig. 1 einsetzbaren Prüfkörpers.

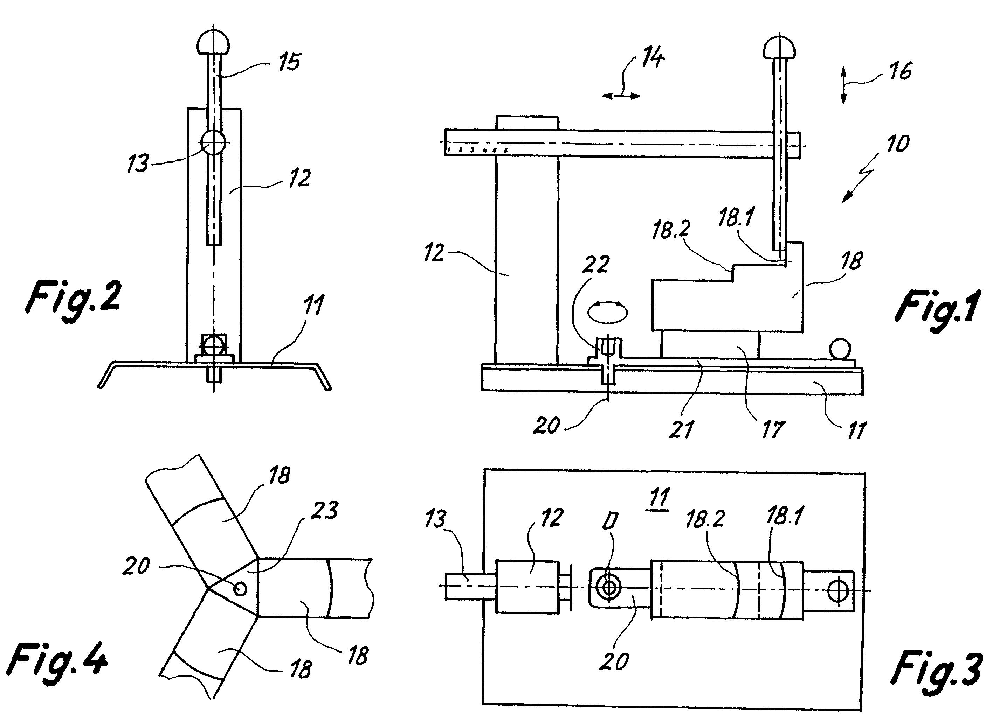

Die Vorrichtung 10 gemäß Fig. 1 weist eine Grundplatte 11 auf, an der ein vertikaler Ständer 12 angeordnet ist. Am Ständer 12 ist ein Messarm 13 horizontal verstellbar gelagert. Dies ist durch einen Doppelpfeil 14 angedeutet. Der Messarm 13 trägt an seinem Ende einen vertikal verstellbaren Taster 15. Die Verstellrichtung des Tasters 15 ist durch den Doppelpfeil 16 in Fig. 1 angegeben. Auf der Grundplatte 11 ist außerdem ein Sockel 17 angeordnet, auf dem eine Spannbacke 18 mit zwei verschiedenen Spannflächen 18.1 und 18.2 aufgelegt ist. Wie Fig. 3 zeigt, weisen die Spannflächen 18.1 und 18.2 eine gekrümmte Kontur auf, um zylindrische Werkstücke spannen zu können.

Die Funktionsweise der Vorrichtung 10 ist wie folgt: Zunächst wird der Messarm 13 entsprechend dem Durchmesser des zu spannenden Werkstücks im Ständer 12 verschoben. Hierzu weist der Messarm 13 eine Skala 19 zur leichteren Einstellung auf. Anschließend wird die auszutestende Spannbacke 18 auf den Sockel 17 aufgelegt und so lange verschoben, bis eine der Spannflächen 18.1, 18.2, hier die Spannfläche 18.1, in Berührung mit dem Taster 15 kommt, der deswegen vertikal verstellbar sein muss, um für unterschiedliche, in verschiedenen Höhenpositionen an der Spannbacke 18 angeordnete Spannflächen 18.1, 18.2 als Anschlag dienen zu können. Nachdem die Spannfläche 18.1 mit dem Taster 15 in Berührung gebracht worden ist, wird überprüft, ob die Spannbacke 18 weder zu weit radial nach innen noch zu weit nach außen über den Sockel 17 hinausragt. Nur dann kann die Spannbacke 18 als geeignet angesehen werden, das betreffende Werkstück optimal zu spannen. Gleichzeitig kann ausgemessen werden, wie weit die Spannbacke 18 radial nach innen, in Fig. 1 nach links über den Sockel 17 übersteht. Um exakt dieses Maß müssen die Spannbacken dann radial nach innen überstehend im Futter montiert werden.

An derjenigen Stelle 20 der Grundplatte 11, die im Verhältnis zum Sockel 17 der Futterachse entspricht, weist eine Bodenplatte 21 des Sockels 17 einen Drehpunkt D (Fig. 3) auf. Dadurch ist es möglich, den Sockel 17 und die auf ihm befindliche Spannbacke 18 zu schwenken, wodurch mit Hilfe des Tasters 15 exakt ausgemessen werden kann, ob die Krümmung der Spannfläche 18.1, 18.2 der Krümmung des zu spannenden Werkstücks entspricht, oder ob die Spannfläche 18.1, 18.2 gegebenenfalls nachbearbeitet werden muss. An der Position der Futterachse 20 weist die Grundplatte 11 außerdem eine Steckachse 22 für einen Prüfkörper 23 (Fig. 4) mit einem dreieckförmigen Querschnitt auf. Die Seitenlänge des dreickförmigen Querschnitts entspricht dabei der Breite der Spannbacken 18. Auf diese Weise kann mit dem Körper kontrolliert werden, ob bei Verwendung der gerade betrachteten Spannbacke die drei Spannbacken beim Spannvorgang gegebenenfalls mit ihren Kanten aneinanderstoßen. In diesem Fall müssten dann andere Spannbacken eingesetzt werden.

Der Sockel 17 mit seiner Bodenplatte 21 kann vorzugsweise austauschbar an der Grundplatte 11 angeordnet sein. Es lässt sich dann je nach Futtertyp der passende Sockel 17 mit zugehöriger Bodenplatte 21 in der Vorrichtung einsetzen. Der Sockel 17 und die Bodenplatte 21 können dabei mit einem Schnellverschluss durch Eindrehen um die Achse 20 an der Grundplatte 11 verankert werden.

Fig. 2 zeigt die Vorderansicht der Vorrichtung 10, jedoch ohne Sockel 17 und Spannbacke 18. Aus dieser Figur ist zu erkennen, dass die Grundplatte 11 bei diesem Ausführungsbeispiel aus einem gebogenen Blechteil gefertigt ist.

## Patentansprüche

1. Einstellgerät zur Bestimmung der passenden Spannbacken und deren Position für ein in einem gegebenen Spannfutter zu spannenden Werkstück mit einer Grundplatte (11) und einem darauf angeordneten Sockel (17) für eine Spannbacke (18) sowie einem auf der Grundplatte (11) angeordneten Ständer (12), an dem ein Messarm (13) horizontal verstellbar gelagert ist, der an seinem Ende einen vertikal verstellbaren Taster (15) aufweist, wobei mit dem Messarm (13) die für einen bestimmten Werkstückdurchmesser erforderliche Position der Spannfläche (18.1, 18.2) der Spannbacke (18) einstellbar ist und anschließend die Spannfläche (18.1, 18.2) einer auszutestenden Spannbacke (18) durch Verschieben der Spannbacke (18) auf dem Sockel (17) in Anschlag gegen den vertikal verstellbaren Taster (15) am Ende des Messarms (13) bringbar ist.

2. Einstellgerät nach Anspruch 1, **dadurch gekennzeichnet, dass** der Messarm (13) mit einer Skala (19) und/oder einem Zählwerk oder einer anderen Messeinrichtung versehen ist.

3. Einstellgerät nach Anspruch 1 oder 2, **dadurch gekennzeichnet, dass** an der im Verhältnis zur Position des Sockels (17) der Futterachse (20) entsprechenden Stelle auf der Grundplatte (11) Prüfkörper (23) mit einem dreieckförmigen Querschnitt einsetzbar sind, wobei die Seitenlängen des dreieckförmigen Querschnitts der Breite der jeweiligen auszutestenden Spannbacke (18) entsprechen.

4. Einstellgerät nach einem der Ansprüche 1 bis 3, **dadurch gekennzeichnet, dass** der Sockel (17) um die der Futterachse entsprechenden Stelle (20) auf der Grundplatte (11) begrenzt schwenkbar angeordnet ist.

## Claims

1. An adjusting device for determining which damping jaws are suitable and for determining their position for a workpiece to be clamped in a given clamping chuck, comprising a baseplate (11) and a pedestal (17) arranged thereon for a clamping jaw (18), and comprising a pillar (12) arranged on the baseplate (11), on which pillar (12) a measuring arm (13) having at its end a vertically adjustable tracing pin (15) is mounted in a horizontally displaceable manner, wherein the position of the clamping face (18.1,18.2) of the clamping jaw (18) required for a particular workpiece diameter is adjustable and the clamping face (18.1,18.2) of a clamping jaw (18) to be tested is then movable into abutment against the vertically adjustable tracing pin (15) at the end of the measuring arm (13) by displacement of the clamping jaw (18) on the pedestal (17).

2. An adjusting device according to Claim 1, **characterised in that** the measuring arm (13) is provided with a scale (19) and/or a counter or other measuring device.

3. An adjusting device according to Claim 1 or 2, **characterised in that** test pieces (23) having a triangular cross section can be located at the point on the baseplate (11) corresponding to the axis (20) of the chuck in relation to the position of the pedestal (17), the length of the sides of the triangular cross section corresponding to the width of the clamping jaw (18) to be tested.

4. An adjusting device according to one of claims 1 to 3, **characterised in that** the pedestal (17) is arranged to be swivellable within limits about the point (20) on the baseplate (11) corresponding to the axis of the chuck.

## Revendications

1. Appareil de réglage pour déterminer les mâchoires de serrage adaptées et leur position pour une pièce à serrer dans un mandrin de serrage donné, comportant une plaque de base (11) et un socle (17) disposé sur celle-ci pour une mâchoire de serrage (18), ainsi qu'un montant (12) disposé sur la plaque de base (11), sur lequel un bras de mesure (13), qui comporte à son extrémité un palpeur (15) réglable verticalement, est monté de manière réglable horizontalement, le bras de mesure (13) permettant de régler la position nécessaire pour un diamètre déterminé de la pièce, de la surface de serrage (18.1, 18.2), de la mâchoire de serrage (18), et la surface de serrage (18.1, 18.2) d'une mâchoire de serrage (18) à tester pouvant ensuite être amenée, par coulissement de la mâchoire de serrage (18) sur le socle (17), en butée contre le palpeur (15) réglable verticalement, à l'extrémité du bras de mesure (13).

2. Appareil de réglage selon la revendication 1, **caractérisé en ce que** le bras de mesure (13) est pourvu d'une échelle (19) et/ou d'un compteur ou d'un autre dispositif de mesure.

3. Appareil de réglage selon la revendication 1 ou 2, **caractérisé en ce que** des corps d'essai (23) de section transversale triangulaire peuvent être insérés sur la plaque de base (11) à l'emplacement qui correspond à l'axe (20) du mandrin par rapport à la position du socle (17), les longueurs des côtés de la section transversale de forme triangulaire correspondant à la largeur de la mâchoire de serrage (18) respective à tester.

4. Appareil de réglage selon l'une des revendications 1 à 3, **caractérisé en ce que** le socle (17) est disposé de manière à pouvoir pivoter dans une mesure limitée sur la plaque de base (11) autour de l'emplacement (20) correspondant à l'axe du mandrin.
